# EUROPEAN PATENT SPECIFICATION

(11) **EP 3 553 337 B1**
(45) Date of publication and mention of the grant of the patent: **28.10.2020**
(21) Application number: 18382249.3
(22) Date of filing: 12.04.2018
(51) Int. Cl.: F16D 25/0635, F16D 66/02, F16D 67/04

(54) **CLUTCH ASSEMBLY FOR A MACHINE**
KUPPLUNGSANORDNUNG FÜR EINE MASCHINE
ENSEMBLE D'EMBRAYAGE POUR UNE MACHINE

(43) Date of publication of application: 16.10.2019
(73) Proprietor: Goizper, S.Coop., 20577 Antzuola (Gipuzkoa) (ES)
(72) Inventor: TIJERO SERNA, Maria, 20550 ARETXABALETA (ES); ARROYO FERNANDEZ DE LECETA, Ekhi, 01002 VITORIA - GASTEIZ (ES); MONDRAGON ORTUETA, Mikel, 20577 ANTZUOLA (ES)
(74) Representative: Igartua, Ismael

(56) References cited:
- DE-A1- 3 244 745
- DE-A1- 3 433 236
- DE-A1- 19 744 042
- DE-A1- 19 754 523
- US-A1- 2008 296 121
- US-A1- 2009 050 418
- US-A1- 2012 138 417

## Description

### TECHNICAL FIELD

The present invention relates to clutch assemblies used in machines, such as mechanical presses, for example.

### PRIOR ART

Clutch assemblies, as the one disclosed in US2008296121A1, for example, are known, and they are used in various machines, such as in mechanical presses, for example. A clutch assembly comprises at least two main parts: a body connected to the shaft of the machine and a clutch friction disc. The clutch friction disc is connected to a rotating part of the machine (a flywheel, for example). In some cases, the clutch assembly further comprises a brake friction disc, which is connected to a stationary part of the machine (to the frame, for example).

ES2389189A1, belonging to the same applicant, discloses a clutch assembly of the latter type, comprising a piston in the body which, when actuated by pressurized air, causes the clutch friction disc to connect the body (the shaft of the machine) with the rotating part of the machine by means of friction. In this situation, the machine is engaged. When the piston is no longer actuated with pressurized air, said piston returns to its initial position with the help of springs used for such purpose. In this position, the brake friction disc connects the body (the shaft of the machine) with the stationary part of the machine by means of friction. In this situation, the machine is braked.

Torque is thereby transmitted by means of friction in clutch assemblies of this type. On both sides (brake and clutch), either when the body is connected to the stationary part of the machine or when it is connected to the rotating part, there is a dynamic transmission of torque which is supported by the friction material, which becomes worn. This friction material can be comprised in friction sectors which are arranged both in the clutch friction disc and in the brake friction disc, and it is important to control the wear that is produced because at a certain point it becomes necessary to at least replace the friction sectors with new ones so that the clutch assembly continues to operate in acceptable conditions.

DE3244745A1 discloses a clutch assembly comprising a clutch friction disc with at least one friction pad on one of its two side faces, and means for compensating the wear of the friction pads of the clutch by an automatic adjustment of the friction disc. Said means detect the exceeding of the permissible piston stroke of a piston associated to the clutch, and the compensation is carried out by means of a control receiving a signal resulting from said exceeding stroke.

DE19744042A1 discloses a clutch assembly comprising a clutch friction disc with clutch disc pads at least on one of its two side faces. The clutch assembly further comprises a detection device which is configured for detecting the wear of the friction sector of the clutch friction disc. The wear of the pads is determined according to a measurement of a specific magnetic field.

US2009050418A1 describes a system and a method for monitoring brake wear of a brake assembly. The system comprises a cam shaft configured such that its movement engages and disengages the brake assembly. A cam shaft movement sensor produces a signal corresponding to a position of the cam shaft, and a control circuit activates an indicator when the engaged cam shaft position exceeds a threshold cam shaft position stored in a memory unit.

DE19754523A1 discloses a clutch assembly comprising a clutch friction plate with at least one friction sector on one of its two side faces. The clutch assembly further comprises a detection device which is configured for detecting the wear of the friction sector of the clutch friction plate, and comprising an element with a specific shape, fixed to the clutch friction plate, and a fixed sensor facing said element. According to the width of the friction sector the part of the element comprising the specific shape which is faced to the sensor changes, the wear of said friction sector being determined according to said faced part of said element.

### DISCLOSURE OF THE INVENTION

The object of the invention is to provide a clutch assembly for a machine, as defined in the claims.

The clutch assembly comprises at least:
- one clutch friction disc attached to a rotating part of the machine and comprising at least one friction sector on one of its two side faces, and
- one main body coupled to a shaft of the machine and which, in a clutching position of the clutch assembly, cooperates with the clutch friction disc (with the friction sector of the clutch friction disc) by means of friction, transmitting the rotation of said clutch friction disc to said shaft.

The clutch assembly comprises at least one detection device which is configured for detecting at least the wear of the friction sector of the clutch friction disc and is arranged in the main body.

The detection device comprises:
- at least one wear sensor facing the side face of the corresponding clutch friction disc to measure the wear of the friction sector arranged on said side face,
- at least one control device communicated with the wear sensor, and
- at least one electric power unit configured for powering the wear sensor.

The wear sensor is configured for detecting the distance between its position and the side face of the disc that it is facing, without coming into contact with said side face, and the control device is configured for determining the wear of the friction sector arranged on said side face as a function of said detected distance.

The main body transmits rotation of the clutch friction disc to the shaft by means of friction. This involves progressive wear of the friction sectors involved in the friction, the thickness of which decreases as the wear increases. Therefore, with the clutch assembly being in the clutching position, for example, the friction sector of the clutch friction disc cooperates with the main body by means of friction (by means of contact). This means that the distance between the clutch friction disc and the position of the wear sensor in the main body is representative of said thickness, such that a detection of said distance may give rise to knowing at that time the thickness of said friction sector, and therefore of the wear of said friction sector.

The control device receives the measurements and is capable of interpreting these measurements to determine the wear of the friction sector corresponding. For example, the distance between the wear sensor and the side face that it is facing, as well as the initial thickness of the friction sector arranged on said side face, can be known beforehand, such that it can easily determine the thickness of the friction sector at the time of each reading or measurement of the distance, and it can therefore know the wear thereof.

The wear of the friction sector is thereby determined in the proposed clutch assembly in a safe, efficient, and simple manner. Detection is furthermore performed automatically, making it easier for a user to inspect the friction sector, since said user no longer has to deal with visually inspecting them periodically.

Additionally, this is achieved with a wear device that is not negatively affected by the wear of the friction sector, such that it does not have to be replaced after a certain time (together with the friction sector when the latter becomes worn, for example), which means that said detection device does not affect the replacement of the friction sector when it is required, for example.

These and other advantages and features of the invention will become evident in view of the drawings and the detailed description of the invention.

### DESCRIPTION OF THE DRAWINGS

Figure 1A shows a preferred embodiment of the clutch assembly of the invention in a clutching position and with new friction sectors.
Figure 1B shows the clutch assembly of Figure 1A with used friction sectors.
Figure 2 shows the clutch assembly of Figure 1A in a braking position and with new friction sectors.
Figure 3 schematically shows a detection device of the clutch assembly of Figure 1A without some of its elements (such as the temperature sensor and the communication device).
Figure 4 shows schematically an embodiment of a generator for the clutch assembly of Figure 1A.

### DETAILED DISCLOSURE OF THE INVENTION

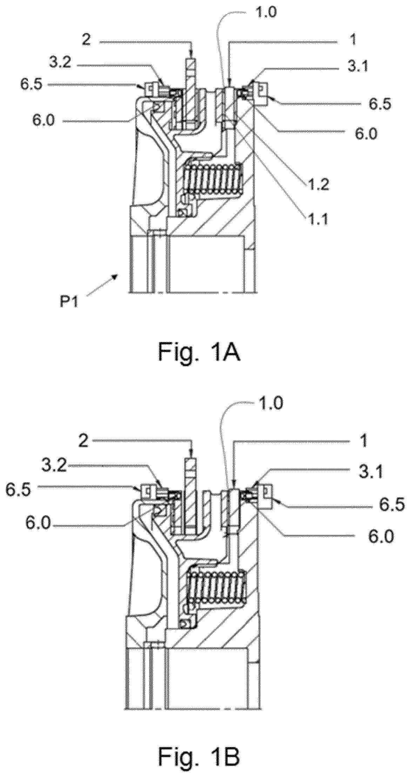

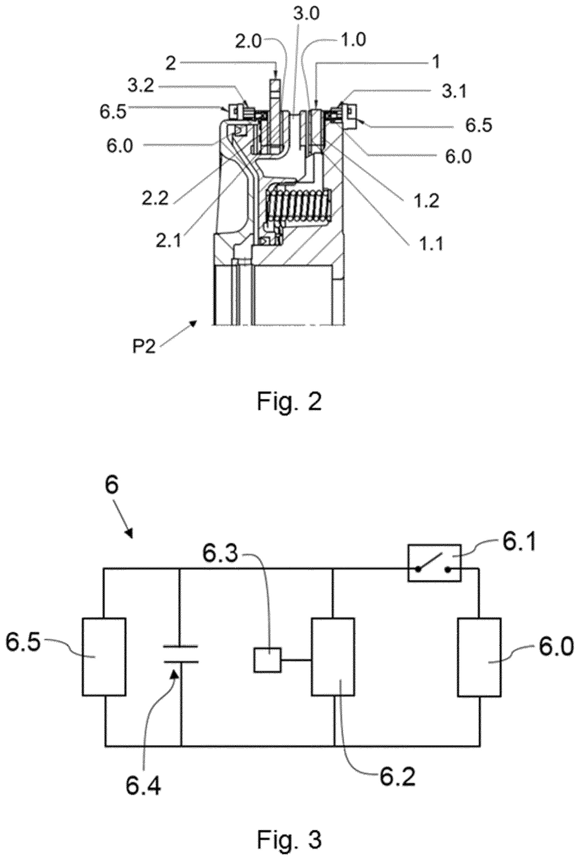

Figures 1A, 1B, and 2 show an embodiment of a clutch assembly 100 for a machine according to the invention. The machine can be a mechanical press, for example.

A clutch assembly 100 comprises at least:
- one clutch friction disc 1 attached to a rotating part of the machine (a flywheel, for example) and comprising at least one friction sector 1.0 (brake shoe) on one of its two side faces 1.1 and 1.2 (in a preferred embodiment, a plurality of friction sectors 1.0 on each of the two side faces 1.1 and 1.2), and
- one main body coupled to a shaft of the machine and which, in a clutching position P1 of the clutch assembly 100, cooperates with the clutch friction disc 1 (with the friction sectors 1.0 of the clutch friction disc 1) by means of friction, transmitting the rotation of said clutch friction disc 1 to said shaft.

In some cases, the clutch assembly 100 is a combined clutch assembly 100 (or combined brake-clutch), such as the one shown in the drawings. In these cases, the clutch assembly 100 further comprises a brake friction disc 2 attached to a fixed part of the machine (the frame, for example), aligned with the clutch friction disc 1 such that they share the same central shaft, and comprising at least one friction sector 2.0 on each of the two side faces 2.1 and 2.2). In a clutching position P1 of the clutch assembly 100, the main body coupled to the shaft of the machine cooperates with the clutch friction disc 1 (with the friction sectors 1.0 of the clutch friction disc 1) by means of friction, transmitting the rotation of said clutch friction disc 1 to said shaft, and in a braking position P2 of said clutch assembly 100, the main body cooperates with the brake friction disc 2 (with the friction sectors 2.0 of the brake friction disc 2) by means of friction, braking said shaft or keeping it braked.

Hereinafter, the invention is explained for a clutch assembly 100 comprising a clutch friction disc 1 and a brake friction disc 2, such as the one shown in the drawings, although it is also applicable to a clutch assembly 100 that does not comprise any brake friction disc 2 (simple clutch assembly 100). Furthermore, the clutch assembly 100 shown in the drawings is actuated by means of a pneumatic actuation, but the actuation could be of another type such as hydraulic or electromagnetic actuation, for example. The manner of actuating the clutch assembly 100 (changing the position thereof) is not limiting in any case.

The clutch assembly 100 comprises at least one detection device, shown in Figure 3, which is configured for detecting at least the wear of the friction sectors 1.0 and 2.0 of the clutch friction disc 1 or brake friction disc 2, and is arranged in the main body. The detection device comprises:
- at least one wear sensor 6.0 facing the side face of the clutch friction disc 1 or the brake friction disc 2 to measure the wear of the friction sector 1.0 or 2.0 arranged on said side face,
- at least one control device 6.2 communicated with the wear sensor 6.0, and
- at least one power unit 6.4 which is configured for electrically powering the wear sensor 6.0 and which may comprise a supercapacitor (case of the preferred embodiment) or a battery, for example.

The wear sensor 6.0 is configured for detecting the distance between its position and the side face 1.1 and 1.2, or 2.1 and 2.2 of the disc 1 and 2 that it is facing, without coming into contact with said side face 1.1 and 1.2, or 2.1 and 2.2, and the control device 6.2 is configured for determining the wear of the friction sector 1.0 or 2.0 arranged on said side face 1.1 and 1.2, or 2.1 and 2.2 as a function of said detected distance.

As discussed above, this distance is representative of the wear of the corresponding friction sector 1.0 or 2.0, the control device 6.2 being configured for determining said wear as a function of the distance.

The control device 6.2 may furthermore be configured for indicating an alarm in the event that the wear it determines is greater than a predetermined wear threshold (when it is detected that the thickness of the corresponding friction sector 1.0 or 2.0 is less than a given thickness threshold). The control device 6.2 may comprise a microcontroller, a controller, a microprocessor, a FPGA or any other device at least having computing capacity.

In some embodiments, the clutch assembly 100 comprises at least one detection device to detect the wear of the friction sector 1.0 (or friction sectors 1.0) of the clutch friction disc 1 and at least one detection device to detect the wear of the friction sector 2.0 (or friction sectors 2.0) of the brake friction disc 2, but it preferably comprises, as is the case of the preferred embodiment, at least one respective detection device associated with each of the two side faces 1.1 and 1.2 of the clutch friction disc 1 and at least one respective detection device associated with each of the two side faces 2.1 and 2.2 of the brake friction disc 2, such that the wear of all the friction sectors 1.0 and 2.0 of both discs 1 and 2 can be determined (in the event that both discs 1 and 2 have friction sectors 1.0 and 2.0 on their two respective side faces).

In the preferred embodiment, the main body of the clutch assembly 100 comprises a clutching part 3.0 arranged between both discs 1 and 2 and facing a respective first side face 1.1 and 2.1 of both discs 1 and 2, a clutch side cover 3.1 facing a second side face 1.2 of the clutch friction disc 1, and a brake side cover 3.2 facing a second side face 2.2 of the brake friction disc 2. In the clutching position P1, the clutching part 3.0 cooperates with the first side face 1.1 of the clutch friction disc 1 (with the friction sectors 1.0 arranged on said first side face 1.1) by means of friction, and the clutch side cover 3.1 cooperates with the second side face 1.2 of the clutch friction disc 1 (with the friction sectors 1.0 arranged on said second side face 1.2) by means of friction. In the braking position P2, the clutching part 3.0 cooperates with the first side face 2.1 of the brake friction disc 2 (with the friction sectors 2.0 arranged on said first side face 2.1) by means of friction, and the brake side cover 3.2 cooperates with the second side face 2.2 of the brake friction disc 2 (with the friction sectors 2.0 arranged on said second side face 2.2) by means of friction.

The wear sensor 6.0 is a contactless sensor, i.e., it does not come into contact with the face which it is facing and with respect to which the distance is to be measured. It therefore does not require being in contact with the face of the disc 1 and 2 supporting the friction sectors 1.0 or 2.0 the wear of which is to be measured, and it is not affected as the corresponding friction sectors 1.0 or 2.0 become worn (friction does not affect it). Therefore, the wear sensor 6.0 does not require being replaced when the friction sector 1.0 is replaced. This is very advantageous since the user only has to replace the friction sectors 1.0 or 2.0 when excessive wear is detected, which is a necessary change even when wear detection is done visually (without using sensors), so the proposed invention provides the possibility of automatically detecting wear, without this negatively affecting the actuations to be performed by the user.

Preferably, the wear sensor 6.0 is an electromagnetic sensor and the discs 1 and 2 are metallic. Preferably, as occurs in the preferred embodiment, for example, the wear sensor is furthermore arranged facing the friction sectors 1.0 or 2.0 (or the path of the friction sectors 1.0 or 2.0 during rotation thereof, such that it is assured that it will coincide with the friction sectors 1.0 or 2.0 at some point), such that the distance it measures more faithfully reflects the thickness of the corresponding friction sector 1.0 or 2.0. Therefore, different thicknesses of the different friction sectors 1.0, or 2.0 arranged on one and the same face of one and the same disc 1 or 2, should it come to that, or a possible misalignment of the corresponding disc 1 or 2 with respect to the main shaft 9, can even be detected. That is the case when the detected measurements are different in different angular positions of the wear sensor 6.0 with respect to the corresponding disc 1 or 2, with the determined wears associated with said measurements therefore being different. To that end, the friction sectors 1.0 are manufactured from a non-ferromagnetic material, such that they do not interfere with the electromagnetic signal emitted and received by the wear sensor 6.0.

The detection device further comprises a control switch 6.1 between the wear sensor 6.0 and the power unit 6.4, and an inertia sensor 6.3 which is located in the main body and preferably configured for causing the control switch 6.1 to close in the event of a change in speed of said main body, allowing the power unit 6.4 to power the wear sensor 6.0. A continuous reading of the distance to be measured is therefore not required, where it may only be performed when required (in this case in the event of a change in speed), which considerably reduces the energy consumption of the detection device. This furthermore allows reducing the required size of the power unit 6.4, for example.

The inertia sensor 6.3 is communicated with the control device 6.2, such that said control device 6.2 detects when there is a change in speed of the main body, said control device 6.2 causing the control switch 6.1 to close in response to said detection.

Like in the case of the preferred embodiment, the control device 6.2 is preferably configured for detecting the charge level of the power unit 6.4 and for closing the control switch 6.1 when it detects a change in speed of the main body, if said charge level is greater than a predetermined threshold level. It is thereby assured that the power unit 6.4 will provide enough energy to perform the corresponding reading.

Like in the case of the preferred embodiment, the detection device preferably further comprises an electrical energy generator 6.5 located in the main body and configured for charging the power unit 6.4. In this case, the power unit 6.4 comprises a supercapacitor or a similar device, which can be recharged.

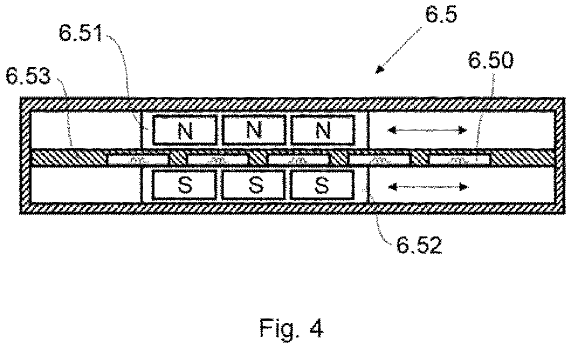

In reference to Figure 4, the generator 6.5 comprises a plurality of fixed coils 6.50, a first movable mass 6.51 comprising at least a first magnet and a second movable mass 6.51 comprising at least a second magnet having a polarity opposite the first magnet, both movable masses 6.51 and 6.52 moving with respect to the coils 6.50 in the event of a change in speed of the main body, said generator 6.5 generating an electric charging current I charging the power unit 6.4 as a result of said movement. The coils 6.50 are arranged between the two movable masses 6.51 and 6.52, and the coils 6.50 are preferably on a printed circuit board 6.53. The generator 6.5 may comprise an enclosure where the elements forming it are arranged and bound.

The detection device may further comprise a temperature sensor located in the main body, facing the same side face that the wear sensor 6.0 is facing, to enable effectively associating the temperature with the detections performed by said wear sensor 6.0. The reading performed by the wear sensor 6.0 can thereby be offset as required as a function of the measured temperature, if deemed appropriate. Furthermore, the evolution of the temperature together with the wear of the corresponding friction sectors 1.0 or 2.0 can be representative of how the clutch assembly 100 operates, either at too high of a rate or below what is possible, for example. If a high temperature is detected, for example, it is possible for the rate to be too high and for it to negatively affect the operation of the clutch assembly 100. So in addition to detecting the wear of the friction sectors 1.0 and/or 2.0 in a simple and effective manner, other parameters relating to the operation of the clutch assembly 100 can be determined.

The temperature sensor comprises a protective layer manufactured in a material having a low coefficient of thermal expansion, preferably invar, so as not to be affected by external factors.

The detection device may further comprise a communication device configured for sending the detections performed by the detection device out of the clutch assembly 100 in a wireless manner. The communication device can be integrated in the control device 6.2, or it can be an independent module, in which case it would be communicated with said control device 6.2 to receive the information it has to transmit. The communication of the communication device can be two-way (both with the control device 6.2, where appropriate, and with the outside). The use of a communication device of this type is advantageous, because since the detection device is arranged in an element that rotates, it is very advantageous to be able to externalize its measurements in order to identify or treat them as required, and for this externalization to additionally be done in a wireless manner (due to the rotation, it would be very complex to be able to externalize the information with a wire).

Preferably, as in the case of the preferred embodiment, the detection device is a module (depicted in the form of a case in the drawings) which is arranged in the main body, where required.

In summary, the clutch assembly 100 may comprise at least as many detection devices as there are faces with friction sectors 1.0 and/or 2.0. For example, if it is a simple clutch assembly 100 (without a brake friction disc 2), the clutch assembly 100 may comprise at least one detection device if only one of the side faces 1.1 and 1.2 of said clutch friction disc 1 comprises a friction sector 1.0, or it may comprise at least two detection devices if both side faces 1.1 and 1.2 comprise a friction sector 1.0 (one detection device for each side face 1.1 and 1.2). Similar combinations can be made for the case of a combined clutch assembly 100 (comprising a clutch friction disc 1 and a brake friction disc 2).

A second aspect of the invention relates to a method for the detection of the wear of the friction sectors of a clutch assembly 100 like the one discussed (in any of its embodiments and/or configurations). In the method, measurements are taken with the wear sensor 6.0 when a change in speed in the main body is detected, as discussed, but it furthermore does so:
- when the wear of the friction sectors 1.0 of the clutch friction disc 1 is to be detected with the clutch assembly 100 in the clutching position P1; and
- when the wear of the friction sectors 2.0 of the brake friction disc 2 is to be detected with the clutch assembly 100 in the braking position 2.

## Claims

1. Clutch assembly for a machine, comprising a clutch friction disc (1) attachable to a rotating part of the machine and comprising at least one friction sector (1.0) on one of its two side faces (1.1, 1.2), and a main body coupleable to a shaft of the machine and which, in a clutching position (P1) of the clutch assembly (100), cooperates with the clutch friction disc (1) by means of friction, transmitting the rotation of said clutch friction disc (1) to said shaft, the clutch assembly (100) further comprising at least one detection device which is configured for detecting the wear of the friction sector (1.0) of the clutch friction disc (1) and which comprises at least one wear sensor (6.0), **characterised in that** the detection device is arranged in the main body and the wear sensor (6.0) faces a side face (1.1, 1.2) of the clutch friction disc (1) to measure the wear of the friction sector (1.0) arranged on said side face, the clutch assembly (100) further comprising at least one control device (6.2) communicated with the wear sensor (6.0), and at least one electric power unit (6.4) configured for powering the wear sensor (6.0), which is preferably a supercapacitor, the wear sensor (6.0) being configured for detecting the distance between its position and the side face (1.1, 1.2) of the clutch friction disc (1) that it is facing, without coming into contact with said side face (1.1, 1.2), and the control device (6.2) being configured for determining the wear of the friction sector (1.0) arranged on said side face (1.1, 1.2) as a function of said detected distance.

2. Clutch assembly according to claim 1, wherein the wear sensor (6.0) is an electromagnetic sensor and the clutch friction disc (1) is metallic.

3. Clutch assembly according to claim 2, wherein each friction sector (1.0) is manufactured from a non-ferrous material and the wear sensor (6.0) is arranged in a region of the main body facing the friction sector (1.0) the wear of which is to be detected.

4. Clutch assembly according to any of the preceding claims, wherein the detection device further comprises a control switch (6.1) between the wear sensor (6.0) and the power unit (6.4), and an inertia sensor (6.3) which is located in the main body and configured for causing the control switch (6.1) to close in the event of a change in speed of said main body, allowing the power unit (6.4) to power the wear sensor (6.0).

5. Clutch assembly according to claim 4, wherein the inertia sensor (6.3) is communicated with the control device (6.2) such that said control device (6.2) detects when there is a change in speed of the main body, said control device (6.2) causing the control switch (6.1) to close in response to said detection.

6. Clutch assembly according to claim 5, wherein the control device is configured for detecting the charge level of the power unit (6.4) and for closing the control switch (6.1) when it detects a change in speed of the main body, if said charge level is greater than a predetermined threshold level.

7. Clutch assembly according to any of the preceding claims, wherein the detection device further comprises an electrical energy generator (6.5) located in the main body and configured for charging the power unit (6.4), the generator (6.5) comprising a plurality of coils (6.50), a first movable mass (6.51) comprising at least a first magnet and a second movable mass (6.52) comprising at least a second magnet having a polarity opposite the first magnet, both movable masses (6.51, 6.52) moving with respect to the coils (6.50) in the event of a change in speed of the main body, said generator (6.5) generating a electric charging current charging the power unit (6.4) as a result of said movement.

8. Clutch assembly according to any of the preceding claims, wherein the detection device further comprises a temperature sensor located in the main body, facing the same side face of the clutch friction disc (1), the temperature sensor preferably comprising a protective layer manufactured in a material having a low coefficient of thermal expansion, preferably invar.

9. Clutch assembly according to any of the preceding claims, wherein the detection device further comprises a communication device configured for sending the detections performed by the detection device out of the clutch assembly (100) in a wireless manner, the communication device being integrated in the control device (6.2) or communicated with said control device (6.2).

10. Clutch assembly according to any of claims 1 to 9, wherein the clutch friction disc (1) comprises at least one friction sector (1.0) on each of its two side faces (1.1, 1.2), the clutch assembly (100) comprising at least one respective detection device associated with each of the two side faces (1.1, 1.2) of the clutch friction disc (1).

11. Clutch assembly according to any of claims 1 to 10, further comprising a brake disc (2) attachable to a fixed part of the machine, comprising at least one friction sector (2.0) on one of its two side faces (2.1, 2.2) and being aligned with the clutch friction disc (1) such that they share the same central shaft, the main body cooperating with the brake friction disc (2) by means of friction in a braking position (P2) of said clutch assembly (100), braking the shaft of the machine or keeping it braked, the clutch assembly (100) further comprising at least one detection device to detect the wear of the friction sector (2.0) of the brake friction disc (2), and the wear sensor (6.0) of said friction device (6) facing the side face (2.1, 2.2) of the brake friction disc (2) which comprises said friction sector (2.0) to measure the wear thereof.

12. Clutch assembly according to claim 11, wherein the brake disc (2) comprises at least one friction sector (2.0) on each of its two side faces (2.1, 2.2), the clutch assembly (100) comprising at least one respective detection device associated with each of said side faces (2.1, 2.2).

13. Method for the detection of the wear of the friction sectors of a clutch assembly according to any of the preceding claims, **characterised in that** the measurements for detecting the wear of the friction sectors (1.0) of the clutch friction disc (1) are taken with the clutch assembly (100) in the clutching position (P1)

14. Method for the detection of the wear of the friction sectors of a clutch assembly according to claim 11 or 12, **characterised in that** the measurements for detecting the wear of the friction sectors (1.0) of the clutch friction disc (1) are taken with the clutch assembly (100) in the clutching position (P1), the measurements for detecting the wear of the friction sectors (2.0) of the brake friction disc (2) being taken with the clutch assembly (100) in the braking position (P2).

## Patentansprüche

1. Kupplungsanordnung für eine Maschine, umfassend eine an einem rotierenden Teil der Maschine anbringbare Kupplungsreibscheibe (1) mit mindestens einem Reibungsbereich (1.0) auf einer ihrer beiden Seitenflächen (1.1, 1.2), und einen an eine Welle der Maschine ankuppelbaren Hauptkörper, der in einer Kupplungsstellung (P1) der Kupplungsanordnung (100) durch Reibung mit der Kupplungsreibscheibe (1) zusammenwirkt, indem er die Drehbewegung der genannten Kupplungsreibscheibe (1) auf die genannte Welle überträgt, wobei die Kupplungsanordnung (100) ferner mindestens eine Detektionsvorrichtung umfasst, die dazu ausgelegt ist, den Verschleiß des Reibungsbereichs (1.0) der Kupplungsreibscheibe (1) zu erfassen und die mindestens einen Verschleißsensor (6.0) umfasst, **dadurch gekennzeichnet, dass** die Detektionsvorrichtung im Hauptkörper angeordnet ist und der Verschleißsensor (6. 0) einer Seitenfläche (1.1, 1.2) der Kupplungsreibscheibe (1) zugewandt ist, um den Verschleiß des auf der genannten Seitenfläche angeordneten Reibungsbereichs (1.0) zu messen, wobei die Kupplungsanordnung (100) ferner mindestens eine mit dem Verschleißsensor (6.0) verbundene Steuervorrichtung (6.2) und mindestens eine, zur Versorgung des Verschleißsensors (6.0), der vorzugsweise ein Superkondensator ist, ausgelegte elektrische Leistungseinheit (6.4) umfasst, wobei der Verschleißsensor (6. 0) dazu ausgelegt ist, den Abstand zwischen seiner Position und der ihm zugewandten Seitenfläche (1.1, 1.2) der Kupplungsreibscheibe (1) zu erfassen, ohne mit der genannten Seitenfläche (1.1, 1.2) in Kontakt zu kommen, und die Steuervorrichtung (6.2) zur Ermittlung des Verschleißes des auf der genannten Seitenfläche (1.1, 1.2) angeordneten Reibungsbereichs (1.0) in Abhängigkeit von dem genannten erfassten Abstand ausgelegt ist.

2. Kupplungsanordnung nach Anspruch 1, wobei der Verschleißsensor (6.0) ein elektromagnetischer Sensor ist und die Kupplungsreibscheibe (1) aus Metall ist.

3. Kupplungsanordnung nach Anspruch 2, wobei jeder Reibungsbereich (1.0) aus einem Nichteisenwerkstoff besteht und der Verschleißsensor (6.0) in einem Bereich des Hauptkörpers angeordnet ist, der dem Reibungsbereich (1.0), dessen Verschleiß erfasst werden soll, zugewandt ist.

4. Kupplungsanordnung nach einem der vorstehenden Ansprüche, wobei die Detektionsvorrichtung ferner einen Steuerschalter (6.1) zwischen dem Verschleißsensor (6.0) und der Leistungseinheit (6.4) umfasst und einen im Hauptkörper angeordneten Trägheitssensor (6.3) umfasst, der so ausgelegt ist, dass er bei einer Drehzahländerung des genannten Hauptkörpers den Steuerschalter (6.1) zum Schließen veranlasst, so dass die Leistungseinheit (6.4) den Verschleißsensor (6.0) mit Energie beaufschlagen kann.

5. Kupplungsanordnung nach Anspruch 4, wobei der Trägheitssensor (6.3) mit der Steuervorrichtung (6.2) derart verbunden ist, dass die genannte Steuervorrichtung (6.2) erkennt, wenn sich die Drehzahl des Hauptkörpers ändert, wobei die genannte Steuervorrichtung (6.2) veranlasst, dass sich als Reaktion auf das genannte Erkennen der Steuerschalter (6.1) schließt.

6. Kupplungsanordnung nach Anspruch 5, wobei die Steuervorrichtung so ausgelegt ist, dass sie den Ladestand der Leistungseinheit (6.4) erfasst und bei Erkennen einer Drehzahländerung des Hauptkörpers den Steuerschalter (6.1) schließt, wenn der genannte Ladestand über einem vorbestimmten Schwellenwert liegt.

7. Kupplungsanordnung nach einem der vorstehenden Ansprüche, wobei die Detektionsvorrichtung ferner einen im Hauptkörper angeordneten und zum Laden der Leistungseinheit (6.4) ausgelegten Elektroenergiegenerator (6.5) umfasst, wobei der Generator (6.5) eine Vielzahl von Spulen (6.50), eine erste bewegliche Masse (6.51) mit mindestens einem ersten Magneten und eine zweite bewegliche Masse (6. 52) mit mindestens einem zweiten Magneten mit einer dem ersten Magneten entgegengesetzten Polarität umfasst, wobei sich beide beweglichen Massen (6.51, 6.52) bei einer Drehzahländerung des Hauptkörpers relativ zu den Spulen (6.50) bewegen, wobei der genannte Generator (6.5) einen elektrischen Ladestrom erzeugt, der durch die genannte Bewegung die Leistungseinheit (6.4) auflädt.

8. Kupplungsanordnung nach einem der vorstehenden Ansprüche, wobei die Detektionsvorrichtung ferner einen im Hauptkörper angeordneten Temperatursensor aufweist, der derselben Seitenfläche der Kupplungsreibscheibe (1) zugewandt ist, wobei der Temperatursensor vorzugsweise eine Schutzschicht aus einem Material mit einem niedrigen Wärmeausdehnungskoeffizienten, vorzugsweise Invar, aufweist.

9. Kupplungsanordnung nach einem der vorstehenden Ansprüche, wobei die Detektionsvorrichtung ferner eine Kommunikationsvorrichtung umfasst, die so ausgelegt ist, dass sie die von der Detektionsvorrichtung durchgeführten Detektionen drahtlos aus der Kupplungsanordnung (100) heraus sendet, wobei die Kommunikationsvorrichtung in die Steuervorrichtung (6.2) integriert ist oder mit der genannten Steuervorrichtung (6.2) verbunden ist.

10. Kupplungsanordnung nach einem der Ansprüche 1 bis 9, wobei die Kupplungsreibscheibe (1) auf jeder ihrer beiden Seitenflächen (1.1, 1.2) mindestens einen Reibungsbereich (1.0) aufweist, wobei die Kupplungsanordnung (100) für jede der beiden Seitenflächen (1.1, 1.2) der Kupplungsreibscheibe (1).

11. Kupplungsanordnung nach einem der Ansprüche 1 bis 10, ferner umfassend eine an einem festen Teil der Maschine anbringbare Bremsscheibe (2) mit mindestens einem Reibungsbereich (2.0) auf einer ihrer beiden Seitenflächen (2.1, 2. 2), die mit der Kupplungsreibscheibe (1) derart in einer Linie liegt, dass sie sich auf derselben zentralen Welle befinden, wobei der Hauptkörper in einer Bremsposition (P2) der genannten Kupplungsanordnung (100) durch Reibung mit der Bremsreibscheibe (2) zusammenwirkt, indem er die Welle der Maschine bremst oder gebremst hält, wobei die Kupplungsanordnung (100) ferner mindestens eine Detektionsvorrichtung zum Erfassen des Verschleißes des Reibungsbereichs (2.0) der Bremsreibscheibe (2) umfasst, und der Verschleißsensor (6.0) der genannten Reibvorrichtung (6) der Seitenfläche (2.1, 2.2) der Bremsreibscheibe (2), die den genannten Reibungsbereich (2.0) enthält, zugewandt ist, um deren Verschleiß zu messen.

12. Kupplungsanordnung nach Anspruch 11, wobei die Bremsscheibe (2) auf jeder ihrer beiden Seitenflächen (2.1, 2.2) mindestens einen Reibungsbereich (2.0) aufweist, wobei die Kupplungsanordnung (100) für jede der genannten Seitenflächen (2.1, 2.2) jeweils mindestens eine ihr zugeordnete Detektionsvorrichtung aufweist.

13. Verfahren zum Erfassen des Verschleißes der Reibungsbereiche einer Kupplungsanordnung nach einem der vorstehenden Ansprüche, **dadurch gekennzeichnet, dass** die Messungen zum Erfassen des Verschleißes der Reibungsbereiche (1.0) der Kupplungsreibscheibe (1) in der Kupplungsstellung (P1) der Kupplungsanordnung (100) durchgeführt werden

14. Verfahren zum Erfassen des Verschleißes der Reibungsbereiche einer Kupplungsanordnung nach Anspruch 11 oder 12, **dadurch gekennzeichnet, dass** die Messungen zum Erfassen des Verschleißes der Reibungsbereiche (1.0) der Kupplungsreibscheibe (1) in der Kupplungsstellung (P1) der Kupplungsanordnung (100) durchgeführt werden und die Messungen zum Erfassen des Verschleißes der Reibungsbereiche (2.0) der Bremsreibscheibe (2) in der Bremsstellung (P2) der Kupplungsanordnung (100) durchgeführt werden.

## Revendications

1. Ensemble d'embrayage pour une machine, comprenant un disque de friction d'embrayage (1) pouvant être fixé sur une partie tournante de la machine et comportant au moins un secteur de friction (1.0) sur l'une de ses deux faces latérales (1.1, 1.2), et un corps principal pouvant être couplé à un arbre de la machine et qui, dans une position d'embrayage (P1) de l'ensemble d'embrayage (100), coopère avec le disque de friction d'embrayage (1) au moyen d'une friction, transmettant la rotation dudit disque de friction d'embrayage (1) audit arbre, l'ensemble d'embrayage (100) comprenant en outre au moins un dispositif de détection qui est configuré pour détecter l'usure du secteur de friction (1.0) du disque de friction d'embrayage (1) et qui comprend au moins un capteur d'usure (6.0), **caractérisé en ce que** le dispositif de détection est disposé dans le corps principal et le capteur d'usure (6.0) fait face à une face latérale (1.1, 1.2) du disque de friction d'embrayage (1) pour mesurer l'usure du secteur de friction (1.0) disposé sur ladite face latérale, l'ensemble d'embrayage (100) comprenant en outre au moins un dispositif de commande (6.2) communiqué avec le capteur d'usure (6.0), et au moins une unité de puissance électrique (6.4) configurée pour alimenter le capteur d'usure (6.0), qui est de préférence un supercondensateur, le capteur d'usure (6.0) étant configuré pour détecter la distance entre sa position et la face latérale (1.1, 1.2) du disque de friction d'embrayage (1) à laquelle il fait face, sans entrer en contact avec ladite face latérale (1.1, 1.2), et le dispositif de commande (6.2) étant configuré pour déterminer l'usure du secteur de friction (1.0) disposé sur ladite face latérale (1.1, 1.2) en fonction de ladite distance détectée.

2. Ensemble d'embrayage selon la revendication 1, dans lequel le capteur d'usure (6.0) est un capteur électromagnétique et le disque de friction d'embrayage (1) est métallique.

3. Ensemble d'embrayage selon la revendication 2, dans lequel chaque secteur de friction (1.0) est fabriqué à partir d'un matériau non ferreux et le capteur d'usure (6.0) est disposé dans une région du corps principal faisant face au secteur de friction (1.0) dont l'usure doit être détectée.

4. Ensemble d'embrayage selon l'une des revendications précédentes, dans lequel le dispositif de détection comprend en outre un commutateur de commande (6.1) entre le capteur d'usure (6.0) et l'unité de puissance (6.4), et un capteur d'inertie (6.3) qui est situé dans le corps principal et configuré pour provoquer la fermeture du commutateur de commande (6.1) en cas de changement de vitesse dudit corps principal, permettant à l'unité de puissance (6.4) d'alimenter le capteur d'usure (6.0).

5. Ensemble d'embrayage selon la revendication 4, dans lequel le capteur d'inertie (6.3) est communiqué avec le dispositif de commande (6.2) de telle sorte que ledit dispositif de commande (6.2) détecte lorsqu'il y a un changement de vitesse du corps principal, ledit dispositif de commande (6.2) provoquant la fermeture du commutateur de commande (6.1) en réponse à ladite détection.

6. Ensemble d'embrayage selon la revendication 5, dans lequel le dispositif de commande est configuré pour détecter le niveau de charge de l'unité de puissance (6.4) et pour fermer le commutateur de commande (6.1) lorsqu'il détecte un changement de vitesse du corps principal, si ledit niveau de charge est supérieur à un niveau de seuil prédéterminé.

7. Ensemble d'embrayage selon l'une des revendications précédentes, dans lequel le dispositif de détection comprend en outre un générateur d'énergie électrique (6.5) situé dans le corps principal et configuré pour charger l'unité de puissance (6.4), le générateur (6.5) comprenant une pluralité de bobines (6.50), une première masse mobile (6.51) comprenant au moins un premier aimant et une deuxième masse mobile (6. 52) comprenant au moins un deuxième aimant ayant une polarité opposée à celle du premier aimant, les deux masses mobiles (6.51, 6.52) se déplaçant par rapport aux bobines (6.50) en cas de changement de vitesse du corps principal, ledit générateur (6.5) générant un courant de charge électrique qui charge l'unité de puissance (6.4) à la suite dudit mouvement.

8. Ensemble d'embrayage selon l'une des revendications précédentes, dans lequel le dispositif de détection comprend en outre un capteur de température situé dans le corps principal, faisant face à la même face latérale du disque de friction d'embrayage (1), le capteur de température comprenant de préférence une couche protectrice fabriquée dans un matériau ayant un faible coefficient de dilatation thermique, de préférence invar.

9. Ensemble d'embrayage selon l'une des revendications précédentes, dans lequel le dispositif de détection comprend en outre un dispositif de communication configuré pour envoyer les détections effectuées par le dispositif de détection hors de l'ensemble d'embrayage (100) d'une manière sans fil, le dispositif de communication étant intégré dans le dispositif de commande (6.2) ou communiqué avec ledit dispositif de commande (6.2).

10. Ensemble d'embrayage selon l'une des revendications 1 à 9, dans lequel le disque de friction d'embrayage (1) comprend au moins un secteur de friction (1.0) sur chacune de ses deux faces latérales (1.1, 1.2), l'ensemble d'embrayage (100) comprenant au moins un dispositif de détection respectif associé à chacune des deux faces latérales (1.1, 1.2) du disque de friction d'embrayage (1).

11. Ensemble d'embrayage selon l'une des revendications 1 à 10, comprenant en outre un disque de frein (2) pouvant être fixé sur une partie fixe de la machine, comprenant au moins un secteur de friction (2.0) sur l'une de ses deux faces latérales (2.1, 2.2) et étant aligné sur le disque de friction d'embrayage (1) de telle sorte qu'ils partagent le même arbre central, le corps principal coopérant avec le disque de friction de frein (2) au moyen d'une friction dans une position de freinage (P2) dudit ensemble d'embrayage (100), freinant l'arbre de la machine ou le maintenant freiné, l'ensemble d'embrayage (100) comprenant en outre au moins un dispositif de détection pour détecter l'usure du secteur de friction (2.0) du disque de friction de frein (2), et le capteur d'usure (6.0) dudit dispositif de friction (6) faisant face à la face latérale (2.1, 2.2) du disque de friction de frein (2) qui comprend ledit secteur de friction (2.0) pour mesurer l'usure de celui-ci.

12. Ensemble d'embrayage selon la revendication 11, dans lequel le disque de frein (2) comprend au moins un secteur de friction (2.0) sur chacune de ses deux faces latérales (2.1, 2.2), l'ensemble d'embrayage (100) comprenant au moins un dispositif de détection respectif associé à chacune desdites faces latérales (2.1, 2.2).

13. Procédé de détection de l'usure des secteurs de friction d'un ensemble d'embrayage selon l'une des revendications précédentes, **caractérisé en ce que** les mesures pour la détection de l'usure des secteurs de friction (1.0) du disque de friction d'embrayage (1) sont effectuées avec l'ensemble d'embrayage (100) en position d'embrayage (P1)

14. Procédé pour la détection de l'usure des secteurs de friction d'un ensemble d'embrayage selon la revendication 11 ou 12, **caractérisé en ce que** les mesures pour la détection de l'usure des secteurs de friction (1.0) du disque de friction d'embrayage (1) sont effectuées avec l'ensemble d'embrayage (100) en position d'embrayage (P1), les mesures pour la détection de l'usure des secteurs de friction (2.0) du disque de friction de frein (2) étant effectuées avec l'ensemble d'embrayage (100) en position de freinage (P2).
